# EUROPÄISCHE PATENTANMELDUNG

(11) **EP 1 074 764 A2**
(43) Veröffentlichungstag der Anmeldung: **07.02.2001**
(21) Anmeldenummer: 00810701.3
(22) Anmeldetag: 04.08.2000
(51) Int. Cl.: F16G 13/16

(54) **Vorrichtung zum Führen und Stützen einer Schleppkette**

(30) Priorität: 06.08.1999 CH 144799
(71) Anmelder: Zindel, Jacques, 8805 Richterswil (CH)
(72) Erfinder: Zindel, Jacques, 8805 Richterswil (CH)

(57) **Zusammenfassung**

Es wird eine Vorrichtung zum Abstützen und Führen einer Schleppkette, insbesondere einer an dem einen Ende mit einer Energiequelle (2) und an dem andere Ende mit einer relativ dazu hin- und herbeweglichen Verbrauchereinheit wirkverbundenen Schleppkette (10) vorgeschlagen, weiche eine Vielzahl wirkverbundener Kettenglieder (8;11) umfasst.

Die Schleppkette (10) ist mittels unuterbrochener Folge im Stützbereich von mit Gleitelementen (9) versehenen Kettengliedern (8,11) und entsprechender beidseitiger Anordnung stationärer Gegenlager (12) geführt und gegen Durchhängen des oberen Trumes (7) gesichert.

Im Bereiche der Gegenlager (12) verfügt der Bogen (6) über Kettenglieder, weiche über keine Gleitelemente verfügen, weshalb der Bogen (6) kollisionsfrei durch den Stützbereich der Gegenlager (12) rollen kann.

## Beschreibung

Die Erfindung bezieht sich auf eine Vorrichtung zum Abstützen und Führen einer Schleppkette, insbesondere einer, welche an dem einen Ende mit einer Energiequelle und an dem anderen Ende mit einer relativ dazu hin- und herbeweglichen Verbrauchereinheit wirkverbundenen ist, und die im wesentlichen aus einer Anzahl gelenkig miteinander wirkverbundener Kettenglieder besteht und ein Untertrum, ein rollender Bogenteil sowie ein Obertrum umfasst.

Zu Führen und Stützen beweglicher elektrischer oder optischer Leiter sowie für den Transport gasförmiger und flüssige Medien bestimmte Schläuche sind Schleppketten allgemein bekannt. Bei diesen Schleppketten, insbesonder mit relativ langem Rollweg, ist es bekannt, dass das Obertrum trotz gegenseitig wirkender Biegearretierung der Kettenglieder aufgrund des Ketteneigengewichtes und durch das zusätzliche Gewicht der zu schleppenden Leitungselemente wie beispielsweise Kabel oder Schläuche sowie durch das elastische Verhalten der Kettenmaterialien durchhängt und teilweise auf dem Untertrum gleitet. Nachteilig ist dabei weniger die zwischen Unter- und Obertrum auftretende Reibung sonder die gegenüber eines geraden, nicht durchhängenden Obertrumes, stark eingeschränkte Knickfestigkeit. Eine hohe Knickfestigkeit des Obertrumes ist vor allem dann erforderlich, wenn dieses hoher horizontal gerichteter Beschleunigungskräfte standhalten muss. Zur Vermeidung dieses Durchhängens ist es weiterhin bekannt, die Schleppkette ausserhalb des Rollbereiches der Kette, auf entsprechend angeordneten Elementen gleiten zu lassen. Mit E 0 693 638 B1 ist sodann eine Lösung bekannt, welche eine weitergehende Abstützung des Obertrumes erlaubt. Dabei wird die Schleppkette mittels mehreren, quer zur Transportrichtung seitlich an einzelnen Kettengliedern angeordneten Bolzen auf Führungsschienen abgestützt.

Diese Führungsschienen vefügen über Ausnehmungen, durch welche die mit Bolzen versehenen einzelnen Kettenglieder auslenkbar sind. Die Abstände der Bolzen müssen jenen der Ausnehmungen entsprechen. Diese Abstände dürfen dabei nicht gleich bleiben, weil sonst keine Abstützung zustande käme. Dies bedeutet einerseits, dass die Führungsschienen mit den zugehörigen Ausnehmungen über den gesamten Stützbereich ausgeführt werden müssen, und dass andererseits diese Führungsschienen unterschiedliche Längenabmessungen aufweisen müssen, was erhebliche Kosten verursacht.

Hinzu kommt, dass bei dieser bekannten Lösung Lagerbolzen verlängert gleichzeitig als Stützelemente wirken, was ein gegenseitiges Einrasten der Kettenglieder nur unter hoher Beanspruchung des Kettenmateriales erlaubt.

Die Aufgabe wird erfindungsgemäss dadurch gelöst, dass die einzelnen Kettenglieder durch zweckmässige Gestaltung die Funktion der Abstützschienen selber übernehmen, und dass als stationäre Gegenlager der Kettenglieder relativ kleine, einheitliche und nur partiell eingesetzte Elemente erforderlich werden; der Kostenaufwand für eine Kettenabstützung wird dadurch entscheidend reduziert. Diese zweckmässige Gestaltung ist bestimmt durch Kettenglieder mit beidseitig, quer zur Schlepprichtung angebrachten Gleitelementen.
In jenem relativ kleinen Bereich, in welchem der rollende Kettenbogen das jeweilige stationäre Gegenlager durchläuft, sind an den Kettengliedern keine Gleitelemente vorhanden. Es kann daher keine Kollision zwischen Gegenlager und Gleitelement auftreten.

Ausführungsbeispiele der Erfindung werden nachstehend anhand der Zeichnungen beschrieben. Es zeigt:
**Fig. 1** eine in schematischer Ansicht dargestellte Vorrichtung mit einer eine Energiequelle mit einer Verbrauchseinheit verbindende und zur Aufnahme mindestens eines mit Energie beaufschlagbaren Leitungsgliedes ausgebildeten Schleppkette.
**Fig. 2** ein Bogenstück der Schleppkette in räumlicher Ansicht und im Moment des Vorbeilaufens an einem stationären Gegenlager dargestellt. Die Gleitelemente an den Kettengliedern sind mit fetten Strichen gezeichnet, ein Gegenlager zeichnerisch gestrichelt freigestellt.
**Fig. 3** ein Teilstück der Schleppkette in Ansicht, Seiten- und Grundriss mit Obertrum, Bogen und Untertrum sowie mit stationären Gegenlagern. Gegenlager mit Gleitschuh ist in Y vergrössert dargestellt.
**Fig. 4** Kettenglied einzeln mit separatem Oberteil als ergänzendes Ausführungsbeispiel.

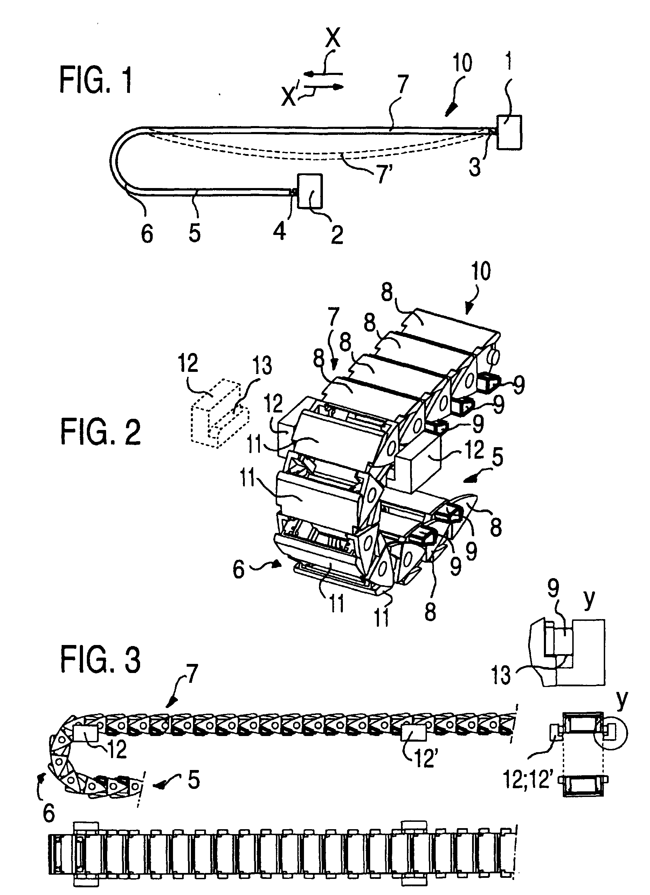

Zur Verdeutlichung der Erfindung ist in Fig. 1 eine in schematischer Ansicht dargestellte und in der Gesamtheit mit 10 bezeichneten Schleppkette dargestellt.
Diese Schleppkette dient zur Aufnahme eines oder mehrerer, in Fig. 1 nicht näher dargestellten Leitungsgliedes, welches in einem in Fig. 1 nicht näher dargestellten, durch Kettenglieder bewirkten, geschlossenen Kanal von einer Energiequelle 2 zur Verbrauchereinheit 3 geführt wird. Die Verbrauchereinheit 1 ist mit nicht dargestellten Mittein relativ zur Energiequelle 2 gemäss Pfielrichtung X und X' hin- und her beweglich.

Im dargestellten Ausführungsbeispiel umfasst die aus einer Vielzahl gelenkig niteinander wirkverbundener und in Fig. 1 nicht näher dargestellter Kettenglieder gebildete Schleppkette 10 ein Untertrum 5, ein Bogenteil 6 sowie ein daran anschliessendes Obertrum 7. Das Untertrum 5 ist mittels einem ersten Anschlussstück 4 an der Energiequelle 2 und an das Obertrum 7 mittels einem zweiten Anschlussstück 3 an der Verbrauchereinheit 1 in nicht näher dargestellter Weise befestigt.

Wie in Fig. 1 schematisch dargestellt, besteht bei relativ langem Verfahrweg und/oder relativ hoher Beschleunigung des Obertrumes 7 bedingt durch die Durchbiegung 7' und der dadurch reduzierten Knickfestigkeit die Gefahr einer Betriebsstörung. Die Durchbiegung 7' ist Abhängig von der elastischen Verformbarkeit der Kettenglieder, von der Länge des Obertrumes sowie von der Eigenlast der Schleppkette und der Last der Energieleiter abhängig.

Fig. 2 zeigt einen Bogenteil 6 der Schleppkette 10. Die quer zur Schlepprichtung X und X' und beidseitig der einzelnen Kettenglieder 8 angebrachten Gleitelemten 9 sind im Obertrum 7 wie im Untertrum 5 ersichtlich. Erkennbar ist ebenso das Fehlen dieser Gleitelemente bei den Kettenglieder 11 im Bogen 6, in dessen momentanem Rollbereich sich die staionären Gegenlager 12 befinden, deren Befestigung hier nicht näher beschrieben wird, da sie ausserhalb des Schleppkettenbewegungsbereiches beliebig erfolgen kann.

In Figur 3 ist eine mit Fig. 2 etwa übereinstimmende Darstellung gewählt. Anfangteil des Obertrumes 7 und Endteil des Untertrumes 5 sind der Uebersichtlichkeit wegen abgeschnitten gezeichnet. Der Abstand der stionären Gegenlager 12 und 12' in Richtung X bezw. X' ist abhängig von den für die dynamischen Anforderungen als zulässig bewertbare strichliert eingezeichneten Durchbiegung 7' in Fig. 1. Diese hat im Sinne der Erfindung möglichst gering zu sein. Die Länge der Gleitfläche 13 in Richtung X und X' der Gegenlager 12 und 12' , auf welcher die Gleitelemente 9 gestutzt werden, ist etwas grösser als der Abstand der Gelenkzapfen der Kettenglieder 8 und 11. Damit ist dem auf der Gleitflache 13 bewegten Kettenglied 8 stets auch das nachfolgende, ebenso mit Gleitelement 9 versehene, abgestützt. Dadurch ist sichergestellt, dass das Obertrum 7 nur minimal durchhängt und folglich hohe Knickkräfte aufnehmen kann und stossfrei über die Gleitflächen 13 gleiten kann.

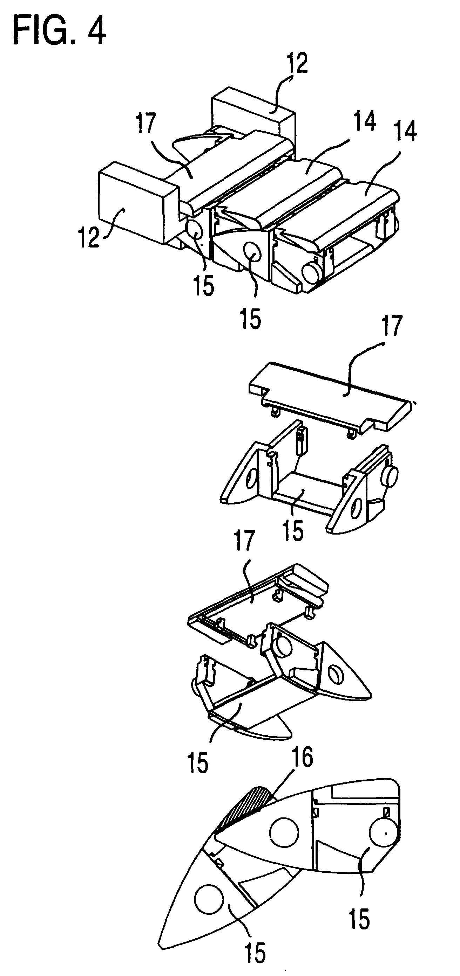

Fig. 4 zeigt die wesentlichen Merkmale als Bestandteil eines weiteren Ausführungsbeispieles. Hiernach befindet sich das Gleitelement 9 gem. Fig. 2 und 3 als Verlängerung quer zur Achse X und X' an einem Verschlussteil 17 eines generell einsetzbaren Kettenglied-Basisteiles 15. Diese Verschlussteile 17 werden zur Vermeidung unzulässiger Durchbiegung 7' an den stationären Gegenlager 12 hängend geführt. Der Vorteil liegt darin, dass man einheitliche Kettenglied-Basisteile 15 verwenden kann, und nur im Ueberschneidungsbereich von Bogen 6 und Gegenlager 12 diese mit Verschlussteilen ohne Gleitelemente 14 bestücken muss. Weiterhin ist Verschlussteil 14 und 17 so gestaltet, dass er auch den Biegeradius des Bogens 6 durch Anschlagpartie 16 (fette Strichart) definiert. Will man nachträglich etwa durch Nachrüsten der Schleppkette 10 mit Energieleitungen und dgl. die einen grösseren Biegeradius voraussetzen, braucht man nur Verschlussteil 14 auszuwechseln.

## Patentansprüche

1. Schleppkette, insbesondere eine an dem einen Ende mit einer Energiequelle (2) und an dem anderen Ende mit einer relativ dazu hin- und beweglichen Verbrauchereinheit (1) wirkverbundenen Schleppkette (10), welche im wesentlichen aus einer Anzahl gelenkig miteinander wirkverbundenen Kettenglieder (8;11) besteht und deren Summe sich in ein Untertrum (5) sowie einen Bogen (6) und ein Obertrum (7) gliedert, dadurch gekennzeichnet, dass die Schleppkette (10) über eine für den Stützbereich erforderliche Folge von Kettengliedern mit quer zur Schlepprichtung (X;X') angeordneten Gleitelementen (9) verfügt, welche auf stationär befestigten Gegenlager (12) gleiten und ein unzulässiges Durchhängen (7') verhindern und im Ueberschneidungsbereich von Bogen (6) und Gegenlager Kettenglieder (11) in ununterbrochener Folge aufweist, die keine Gleitelemente besitzen.

2. Vorrichtung nach Anspruch 1 dadurch gekennzeichnet, dass die Gleitflächen (13) der Gegenlager (12) in Schlepprichtung (X;X') mindestens zwei aufeinaderfolgende Kettenglieder (8;11) abstützen.

3. Schleppkette nach Anspruch 1 dadurch gekennzeichnet, dass die einzelnen Kettenglieder (8;11) aus einem den Kanal verschliessenden Oberteil (14;17) und einem Basisteil (15) bestehen, und Oberteil wahlweise als Verschluss (14) oder als Verschluss mit Gleitelement (17) verwendet wird.

4. Schleppkette nach Anspruch 3 dadurch gekennzeichnet, dass Oberteile (14;17) über Anschlagausprägungen (16) verfügen, welche den Radius des Bogens (6) der Schleppkette (10) definieren.
